(19) **Europäisches Patentamt**

**European Patent Office**

**Office européen des brevets**

(11) **EP 0 959 028 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.⁷: **B65G 47/26**

(21) Anmeldenummer: **99890118.5**

(22) Anmeldetag: **12.04.1999**

(54) **Verfahren zur Steuerung einer Stauförderbahn sowie Steuervorrichtung hierfür**

Method for controlling an accumulating conveyor line and control device therefor

Procédé de réglage d'une ligne transporteuse à accumulation ainsi son dispositif de réglage

(84) Benannte Vertragsstaaten:
**AT DE ES FI FR GB IT SE**

(30) Priorität: **12.05.1998 AT 81498**

(43) Veröffentlichungstag der Anmeldung:
**24.11.1999 Patentblatt 1999/47**

(73) Patentinhaber: **Knapp Logistik Automation GmbH**
**8075 Hart bei Graz (AT)**

(72) Erfinder: **Freudelsperger, Karl, Dipl.-Ing.**
**8075 Hart bei Graz (AT)**

(74) Vertreter: **Weinzinger, Arnulf et al**
**Sonn & Partner Patentanwälte**
**Riemergasse 14**
**1010 Wien (AT)**

(56) Entgegenhaltungen:
**BE-A- 897 047          DE-A- 4 430 614**
**DE-A- 19 501 672     DE-C- 3 443 944**

**Beschreibung**

Die Erfindung betrifft ein Verfahren zur Steuerung einer Stauförderbahn für Fördergüter, bei welcher die Fördergüter in einem Staubereich über bei Stauplätzen angeordnete Sensoren gesteuert in Abstand voneinander angehalten werden, worauf das vorderste Fördergut nach einer vorgegebenen Zeit weitertransportiert und danach mit Abstand das nachfolgende Fördergut bzw. die nachfolgenden Fördergüter weitertransportiert wird bzw. werden.

Des weiteren betrifft die Erfindung eine Steuervorrichtung zur Durchführung eines solchen Verfahrens, bei der Stauplätze mit Einrichtungen zum Anhalten bzw. Weitertransportieren der Fördergüter vorgesehen sind, welche Einrichtungen über Antriebs einrichtungen mit Steuerelementen, z.B. Magnetventilen, betätigbar sind, die jeweils über eine Sensoreinheit aktivierbar bzw. deaktivierbar sind.

Bei Förderanlagen wird allgemein ein möglichst hoher Durchsatz an Fördergütern pro Zeiteinheit angestrebt. Insbesondere bei Förderanlagen mit Staubereichen kommt es beim Weitertransport des Fördergutes darauf an, den lichten Abstand zwischen den weitertransportierten Fördergütern, also den Abstand zwischen der Hinterkante eines jeweils vorderen Fördergutes und der Vorderkante des nachfolgenden Fördergutes, möglichst gering zu halten, um das Kriterium nach Erhöhung des Durchsatzes zu erfüllen.

Aus der AT 402 050 B (=DE 195 01 672 A1) ist eine Stauförderbahn bekannt, bei der das Anhalten und Weitertransportieren der Fördergüter in der oben beschriebenen Weise erfolgt; der Aufbau und die Funktionsweise dieser Stauförderbahn wird nachfolgend noch näher beschrieben.

Eine ähnliche Stauförderbahn ist in der DE 41 11 154 A1 beschrieben, bei welcher das Signal der als Tastschalter ausgebildeten Sensoren zum Anhalten der Fördergüter über UND-Gatter mit dem Aktivierungssignal verknüpft wird. Ein vergleichbarer Staurollenförderer in Modulbauweise und mit Lichtschranken zum Anhalten bzw. Starten der einzelnen Sektionen des Förderers ist in der EP 504 654 A geoffenbart.

In der DE 44 30 614 A1 ist ein Stauförderer für Stückgüter geoffenbart, bei dem ein an Förderrollen andrückbarer Antriebsgurt vorgesehen ist, wobei die Förderrollen durch Absenken des Antriebsgurtes mit einem Bremsgurt festgehalten werden. Der Stauförderer weist mehrere Stauplätze auf, denen jeweils ein Schaltelement zum Andrücken bzw. Lösen des Antriebsgurtes zugeordnet ist. Für einen gleichzeitigen Abzug der gestauten Fördergüter wird ein Elektromagnetventil betätigt, wonach der Antriebsgurt an die Vorderrolle angedrückt wird und somit alle Stauplätze freigegeben werden.

Aus der DE 34 43 944 Cl ist eine Fördervorrichtung mit angetriebenen Transportrollen für Stückgüter bekannt, bei welcher die Antriebe der Transportrollen getrennt zu- bzw. abschaltbar sind. Zwischen den Transportrollen sind Sensoren zum Erfassen von Stückgütern angebracht. Beginnend von einem Stoppsensor wird stromabwärts überprüft, ob ein Stückgut vorliegt. Sofern kein Stückgut detektiert wird, wird der Antrieb der entsprechenden Förderrolle gestoppt, so dass das jeweilige Stückgut in einem Sicherheitsabstand, der im Wesentlichen einem Rollendurchmesser entspricht, zum Stillstand kommt.

Aus der gattungsbilden den BE 897 047 A ist ein Staufȯrderer mit Förderrollen bekannt, bei dem mehrere Stauzonen vorgesehen sind. Die Förderrollen werden von einem unter ihnen angeordneten Förderband angetrieben, welches von höhenverstellbaren Tragwalzen angetrieben wird. Jede Stauzone weist hierzu Aktivierungsmittel auf, wobei die beiden ersten Zonen gleichzeitig angesteuert werden und die darauffolgenden Zonen, in denen sich Fördergüter ansammeln, aufeinanderfolgend aktiviert werden, sofern in der darauffolgenden Zone kein Fördergut vorliegt.

Bei den bekannten Stauförderbahnen ergibt sich beim Weitertransport der Fördergüter ein relativ großer Abstand, der in erster Annäherung der sog. Stauplatzlänge entspricht, welche durch die Länge des Fördergutes vermehrt um einen Sicherheitsabstand zum jeweils davor bzw. dahinter befindlichen Fördergut festgelegt ist. Dadurch ist der Erhöhung des Durchsatzes zwangsläufig eine obere Grenze gesetzt.

Aufgabe der Erfindung ist daher die Schaffung eines Verfahrens sowie einer Vorrichtung der eingangs genannten Art, mit welchem bzw. mit welcher der lichte Abstand der Fördergüter beim Weitertransport aus dem Staubereich optimal verringert werden kann.

Diese Aufgabe wird gemäß einem ersten Aspekt durch ein Verfahren wie im unabhängigen Anspruch 1 definiert gelöst. In vorrichtungsmäßiger Hinsicht wird gemäß einem zweiten Aspekt der Erfindung die Aufgabe durch eine Steuervorrichtung wie in Anspruch 3 angegeben gelöst. Vorteilhafte Ausführungsformen und Weiterbildungen sind in den Unteransprüchen gekennzeichnet.

Das erfindungsgemäße Verfahren ermöglicht vergleichsweise kurze Abstände zwischen den einzelnen Fördergütern und damit eine wesentliche Erhöhung des Durchsatzes an Fördergütern pro Zeiteinheit; es erlaubt außerdem eine Anpassung des Durchsatzes an nachfolgende Fördereinheiten durch individuelle Einstellung der Verzögerungszeit. Ausschlaggebend hierfür ist u.a., daß nun nicht mehr, wie bei der bekannten Technik, gewartet wird, bis an einem Stauplatz das jeweilige Fördergut die Sensoreinheit passiert hat, d.h. die Sensoreinheit nur den Transport des nächsten Fördergutes freigegeben hat, bevor das nächste Fördergut gestartet wird, sondern sofort, nach der einstellbaren Verzögerungszeit, das jeweils nächste Fördergut weiter transportiert wird.

Hierbei hatten sich praktische Versuche als zweckmäßig erwiesen, wenn die Verzögerungszeit zwischen 0,1 und 0,5 s einstellbar ist, wodurch eine individuelle Anpassung je nach Größe und Gewicht des Fördergutes und/oder an die Transportgeschwindigkeit ermöglicht wird, um den lichten Abstand zwischen zwei Fördergütern beim Weitertransport zu minimieren.

Bei der erfindungsgemäßen Steuervorrichtung wird weiters durch

den Einsatz nur eines elektronischen Bausteines pro Antriebseinrichtung die Ansteuerung der Stauplätze zum Anfahren der Fördergüter unter Erzielung verringerter Abstände zwischen diesen in einfacher Weise ermöglicht. Im Hinblick auf eine kompakte Bauweise ist es dabei auch vorteilhaft, daß jede Verzögerungsschaltung in der zugehörigen Sensoreinheit aufgenommen ist.

Gemäß einer bevorzugten Ausführungsform ist vorgesehen, daß der Ausgang der Verzögerungsschaltung mit einem Eingang eines (in an sich bekannter Weise vorgesehenen) UND-Gatters verbunden ist, an dessen anderem Eingang der eigentliche Sensor angeschlossen ist, wobei der Eingang der Verzögerungsschaltung den Eingangsanschluß der Sensoreinheit bildet, und wobei der Eingangsanschluß der einem nachfolgenden Stauplatz zugeordneten Sensoreinheit jeweils mit dem Ausgang der Sensoreinheit des vorhergehenden Stauplatzes verbunden ist. Auf diese Weise wird mit Hilfe eines zusätzlichen elektronischen Bausteines eine effiziente Verknüpfung der Sensorfunktion mit der Verzögerungsfunktion bewerkstelligt, um die angestrebte Verringerung des lichten Abstandes der Behälter beim Weitertransport sowie ein sanftes Anhalten derselben zu erzielen.

Des weiteren ist von Vorteil, wenn eine Treiberstufe für das Steuerelement an den Ausgang des UND-Gatters angeschlossen ist, wodurch eine Anpassung an den Leistungsbedarf des Steuerelementes, z. B. eines Magnetventiles, in einfacher Weise ermöglicht wird.

Gemäß einer bevorzugten Ausführungsform ist vorgesehen, daß die Verzögerungsschaltung aus einem RC-Glied besteht, dessen Widerstand durch eine Diode überbrückt ist, und dessen Kondensator an Masse liegt, wobei an der Eingangsseite des RC-Gliedes ein Puffer und an der Ausgangsseite ein Schmitt-Trigger angeschlossen ist, wobei der Puffer und der Schmitt-Trigger vorzugsweise in CMOS-Technik ausgeführt sind. Diese Schaltung zeichnet sich durch eine geringe Anzahl von aktiven und passiven Bauelementen bei geringem Leistungsbedarf aus. Der Widerstand und/oder der Kondensator kann dabei verstellbar sein, um so die Zeitkonstante des RC-Gliedes und damit die Verzögerungszeit einfach einstellen zu können.

Eine weitere vorteilhafte Ausführungsform ist gekennzeichnet durch eine programmierbare Steuerschaltung, mit welcher die Funktion der Verzögerungsschaltung und des UND-Gatters nachgebildet ist.

Von besonderem Vorteil ist es dabei weiters, wenn die Steuerschaltung als Mikroprozessor mit Speicher-, Ein- und Ausgabeeinheiten ausgebildet ist. Diese Ausführungsform zeichnet sich durch große Flexibilität und hohen Bedienungskomfort aus.

Es ist auch vorteilhaft, wenn der Verzögerungsschaltung eine Schaltergruppe zur Einstellung der Verzögerungszeit zugeordnet ist, wodurch eine rasche und einfache Einstellung der Verzögerungsdauer ermöglicht wird.

Es kann erwähnt werden, daß aus der JP 07-149 412 A2 eine Stauförderbahn bekannt ist, bei der die ankommenden Fördergüter von Sensoren erfaßt werden, worauf die Fördergüter erst nach Ablauf einer durch ein Zeitrelais vorgegebenen Zeitdauer angehalten werden, damit ein minimaler lichter Abstand der Fördergüter im Staubereich resultiert.

Die Erfindung wird nachfolgend anhand von bevorzugten Ausführungsbeispielen, auf die sie jedoch nicht beschränkt sein soll, und unter Bezugnahme auf die Zeichnung noch weiter erläutert. Es zeigen:

Fig.1 eine Stauförderbahn für Fördergüter, insbesondere Behälter, gemäß Stand der Technik in schematischer Seitenansicht;
Fig.2 eine erfindungsgemäße Stauförderbahn für Behälter in schematischer Seitenansicht;
Fig.3 Geschwindigkeits-Zeit-Diagramme zur Erläuterung der in Fig.1 und 2 dargestellten Stauförderbahnen;
Fig.4 ein Blockschaltbild einer Sensoreinheit für die Stauförderbahn nach Fig.2;
Fig.5 einen Schaltplan eines Ausführungsbeispieles einer Verzögerungsschaltung;
Fig.6 Spannungs-Zeitdiagramme zur Erläuterung der Schaltung nach Fig.5;
Fig.7 ein Blockschaltbild einer Sensoreinheit mit einem Mikroprozessor;
Fig.8 ein vereinfacht dargestelltes Schaltbild einer Steuerung zum Weitertransport der Behälter; und
Fig.9 ein Blockschaltbild einer Sensoreinheit mit einem monostabilen Multivibrator.

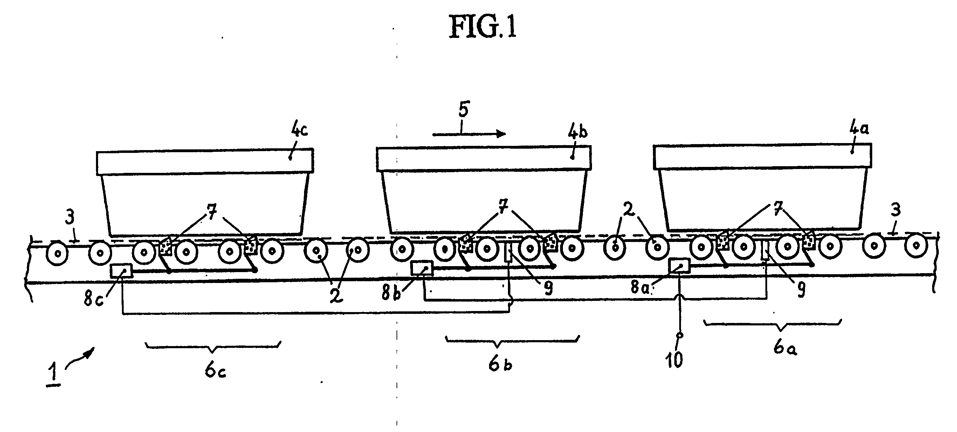

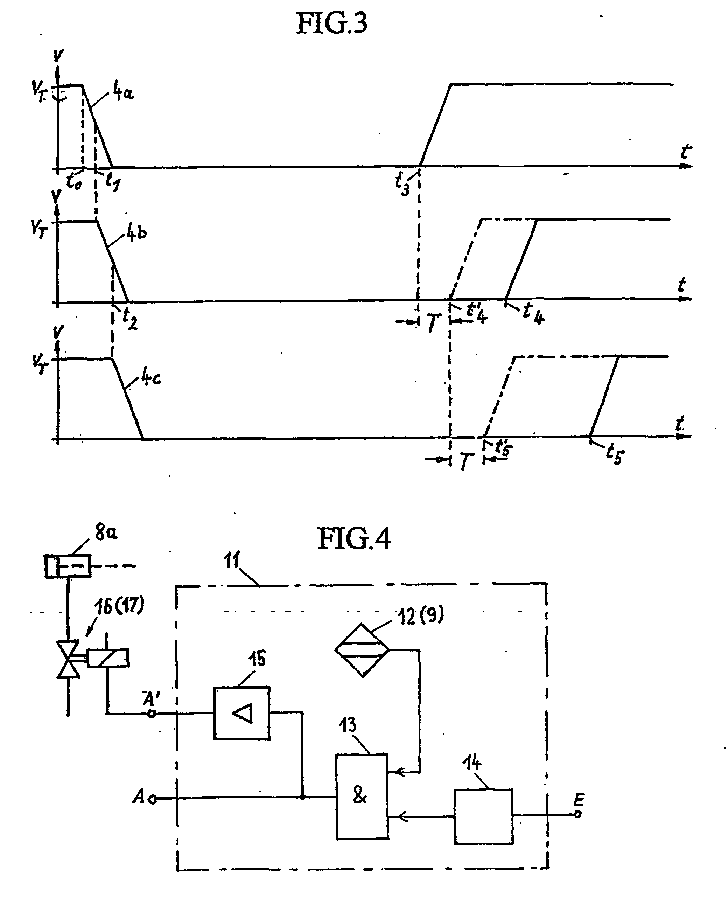

Die in Fig.1 dargestellte Stauförderbahn 1 in Form einer Rollenbahn - die nicht Teil der Erfindung ist - entspricht in ihrem allgemeinen Aufbau der Stauförderbahn nach dem Stand der Technik gemäß Fig.4 der AT 402 050 B. Eine Vielzahl aneinander gereiht angeordneter und durch eine Antriebseinrichtung (nicht dargestellt) ständig in Drehung versetzte Tragrollen 2 bilden einen Laufweg 3 für den Transport von Fördergut, hier in Form von Behältern 4a bis 4c, welche entlang des Laufweges 3 in Richtung des Pfeiles 5 bewegt werden. Zum Anhalten der Behälter 4a bis 4c an z.B. drei Stauplätzen 6a bis 6c (in der Regel werden mehr Stauplätze vorhanden sein) werden Hubelemente in Form von Schwenkleisten 7 eingesetzt, die über Schwenkantriebe 8a bis 8c betätigt werden. Die Schwenkantriebe 8a bis 8c sind vorzugsweise als Druckluft-Arbeitszylinder mit integrierten Magnetventilen ausgebildet, wobei die Schwenkantriebe 8b und 8c über an den Stauplätzen 6a und 6b angeordnete Sensoren 9 ansteuerbar sind, wogegen der Schwenkantrieb 8a des Stauplatzes 6a an einen Steuereingang 10 angeschlossen ist.

Das Anhalten der Behälter 4 erfolgt in der Weise, daß dem Steuereingang 10 ein Signal von einer Steuereinrichtung (nicht dargestellt) zugeführt wird, wodurch der erste auf den Stauplatz 6a zufahrende Behälter 4a mit Hilfe der Schwenkleisten 7 von den Tragrollen 2 abgehoben wird. Der dem ersten (vordersten) Stauplatz 6a zugeordnete Sensor 9 erfaßt das Ankommen des Behälters 4a und aktiviert durch sein Ausgangssignal den Schwenkantrieb 8b des dahinter befindlichen, zweiten Stauplatzes 6b, so daß der nächstfolgende Behälter 4b am Stauplatz 6b abgehoben wird usw., um so nach und nach alle ankommenden Behälter 4 an 'den Stauplätzen 6 anzuhalten.

Dieser Stau-Vorgang ist in den Geschwindigkeits-Zeit-diagrammen der Fig.3 graphisch mit vollen Linien für jeden Behälter 4a bis 4c veranschaulicht. Zum Zeitpunkt $t_0$ wird der erste Behälter 4a abgehoben und seine Transportgeschwindigkeit somit innerhalb einer kurzen "Bremszeit" auf den Wert Null reduziert. Während dieses Bremsvorganges wird die Vorderkante des Behälters 4a durch den dem Stauplatz 6a zugeordneten Sensor 9 zum Zeitpunkt $t_1$ erfaßt, und sein Ausgangssignal zum Schwenkantrieb 8b des nächsten Stauplatzes 6b geleitet, wie oben erläutert wurde. In gleicher Weise wie für den ersten Stauplatz 6a beschrieben wird das Ausgangssignal des dem zweiten Stauplatz 6b zugeordneten Sensors 9 zum Zeitpunkt $t_2$ zum Schwenkantrieb 8c geleitet, und zwar in einer UND-Verknüpfung mit dem Ausgangssignal des ersten Sensors 9. In ähnlicher Weise werden die nachfolgenden Stauplätze, z. B. 6c, angesteuert, vgl. auch die dritte Zeile im Diagramm von Fig.3.

Nach dem so erfolgten Anhalten der Behälter 4a bis 4c können z.B. in diese Artikel eingegeben bzw. aus ihnen entnommen, oder sonstige Arbeitsvorgänge durchgeführt werden. Sobald diese Arbeitsvorgänge abgeschlossen sind, wird zum Zeitpunkt $t_3$ der Schwenkantrieb 8a des vordersten Stauplatzes 6a über den Steuereingang 10 deaktiviert, wodurch der Behälter 4a auf die laufenden Tragrollen 2 abgesetzt und beschleunigt wird, wobei er nach kurzer Beschleunigungszeit wieder die Transportgeschwindigkeit $V_T$ erreicht. Wenn nun die Hinterkante des Behälters 4a den Sensor 9 des Stauplatzes 6a zum Zeitpunkt $t_4$ passiert hat, entfällt dessen Ausgangssignal, wodurch der Schwenkantrieb 8b des nächsten Stauplatzes 6b deaktiviert und der dort gestaute Behälter 4b auf die Rollen 2 abgesetzt und beschleunigt wird.

In gleicher Weise erfolgt dann der Weitertransport des Behälters 4c zum Zeitpunkt $t_5$.

Während des Weitertransportes der Behälter 4a bis 4c mit der Transportgeschwindigkeit $V_T$ ist der lichte Abstand S zweier aufeinanderfolgender Behälter gegeben durch

$$S=(ST-BW)+s_2$$

wobei ST die Länge des Stauplatzes (ident mit dem gegenseitigen Abstand der Sensoren 9) und BW der Bremsweg (Abstand zwischen Sensor 9 und Vorderkante des stehenden Behälters) ist; $s_2$ entspricht der Differenz der Wege, die bei der Beschleunigung zweier aufeinanderfolgender Behälter 4 vom Zeitpunkt des Starts des hinteren Behälters 4 bis zur Erreichung der Fördergeschwindigkeit $v_T$ entsteht, d.h. dem Weg, der sich aus der Differenz des vorderen, meist schon mit maximaler Geschwindigkeit fahrenden Behälters, z.B. 4a, und des aus dem Stand zu beschleunigenden hinteren Behälters, z.B. 4b, ergibt.

Wie oben erläutert, erfolgt der Weitertransport eines nachfolgenden Behälters 4 immer erst dann, wenn die Hinterkante des vorderen, weitertransportierten Behälters 4 den ihm zugeordneten Sensor 9 passiert hat.

Ein gleichzeitiger Weitertransport der Behälter, d.h. ein sog. Blockabzug, würde zwar grundsätzlich eine Beibehaltung des während des Anhaltens gegebenen lichten Behälterabstandes erbringen, hätte aber zur Folge, daß es auf Grund der durch die individuelle Beschaffenheit des Fördergutes bedingten Reibungskräfte zwischen den Behältern und den Rollen der Stauförderbahn während der Beschleunigungsphase zu einer unerwünschten Verschiebung der Fördergüter relativ zueinander - bis hin zur Kollision - kommen kann, d.h. ein Blockabzug wäre eine ungünstige Betriebsart der Stauförderbahn, bei der eine Berührungslosigkeit der Fördergüter untereinander als grundsätzliche Bedingung für einen sicheren Betrieb gefordert wird.

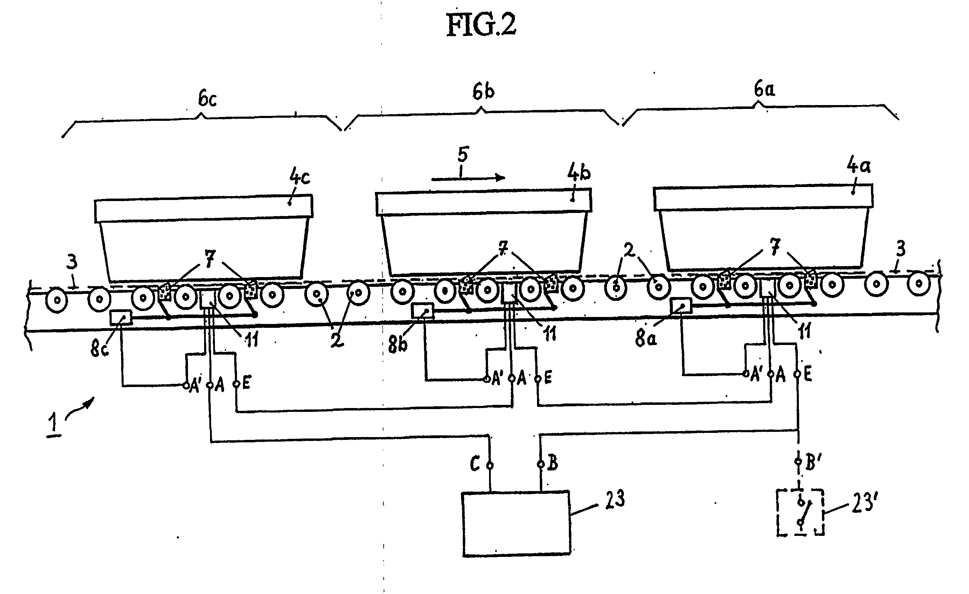

Bei der in Fig.2 veranschaulichten, in ihrem allgemeinen mechanischen Aufbau jenem der Fig.1 vergleichbaren Stauförderbahn 1 ist bei jedem Stauplatz 6a bis 6c eine spezifische Sensoreinheit 11 vorgesehen, deren Blockschaltbild in Fig.4 gezeigt ist, und mit deren Hilfe der Behälterabstand S während des Weitertransportes zwischen den zuvor angeführten Extremwerten bei der bekannten Stauförderbahn, nämlich einerseits dem praktisch durch die Stauplatzlänge vorgegebenen großen Wert und andererseits dem minimalen Wert bei einem Blockabzug, liegt bzw. auf einen geeigneten kleineren Wert gebracht werden kann.

Nach Fig.4 umfaßt die Sensoreinheit 11 beispielsweise einen Reflexions-Lichttaster 12 als Näherungs-Sensor 9, der mit einem Eingang eines UND-Gatters 13 verbunden ist, um ein Signal an das UND-Gatter 13 abzugeben, wobei dieses Signal in an sich herkömmlicher Weise durch einen darüber befindlichen Behälter 4 ausgelöst wird.

Der andere Eingang des UND-Gatters 13 ist an den Ausgang einer Verzögerungsschaltung 14 angeschlossen, welche über einen Eingangsanschluß E der Sensoreinheit 11 ansteuerbar ist. Der Ausgang des UND-Gatters 13 bildet einerseits einen Ausgangsanschluß A der Sensoreinheit 11 und ist andererseits an eine Treiberstufe 15 angeschlossen, die über einen weiteren Ausgangsanschluß A' der Sensoreinheit 11 mit einem Magnetventil 16 als Steuerelement 17 für einen der Schwenkantriebe, z.B. 8a, verbunden ist.

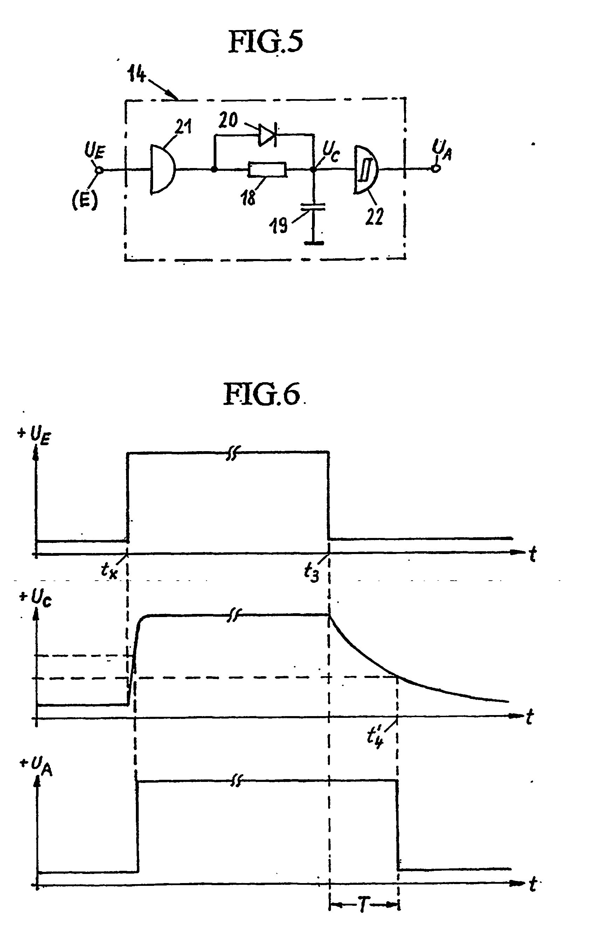

Fig.5 zeigt ein Ausführungsbeispiel für die Verzögerungsschaltung 14. Die Verzögerungsschaltung 14 enthält hier beispielsweise ein RC-Glied 18, 19, dessen Widerstand 18 durch eine Diode 20 überbrückt ist, und dessen Kondensator 19 an Masse liegt. An der Eingangsseite des RC-Gliedes 18, 19 ist ein Puffer 21 und an der Ausgangsseite ein Schmitt-Trigger 22 angeschlossen, wobei diese Schaltbausteine 21 und 22 vorzugsweise in CMOS-Technik ausgeführt sind.

Die Funktionsweise dieser Verzögerungsschaltung 14 wird nachfolgend anhand der drei Spannungs-Zeitdiagramme gemäß Fig.6 erläutert.

Wird zum Zeitpunkt $t_x$ in Fig.6 (z.B. bei der Einleitung des Stauvorganges der Behälter) eine positive Spannung $+U_E$ an den Eingang des Puffers 21 (ident mit Eingang E der Sensoreinheit 11) angelegt, so lädt sich der Kondensator 19 rasch über die in Durchlaßrichtung geschaltete Diode 20 auf. Dabei wird der Schmitt-Trigger 22 ab Erreichen seiner oberen Schaltwelle eingeschaltet, so daß an seinem Ausgang eine positive Spannung $+U_A$ ("High Level") auftritt. Wird nun zum Zeitpunkt $t_3$ (s. außer Fig.6 auch Fig.3) die Spannung $+U_E$ am Eingang des Puffers 21 wieder abgesenkt, was gleichbedeutend mit der Einleitung des Weitertransportes der Behälter 4 ist, so entlädt sich der Kondensator 19 über den Widerstand 18 und Ausgang des Puffers 21 gegen Masse. Sobald die Spannung $U_C$ des Kondensators 19 (s. Fig.6) den unteren Schwellwert des Schmitt-Triggers 22 unterschreitet, d.i. zum Zeitpunkt $t'_4$ (s. außer Fig.6 auch Fig.3), so erniedrigt sich die Ausgangsspannung $U_A$ des Schmitt-Triggers 22 wieder auf den ursprünglichen niedrigen Wert ("Low Level"). Daraus ist ersichtlich, daß eine Verzögerung um die Zeitdauer T zwischen dem Absinken der Eingangsspannung $U_E$ und dem Absinken der Ausgangsspannung $U_A$ gegeben ist, wobei diese Zeitdauer T in erster Linie durch die Wahl der Zeitkonstante des RC-Gliedes 18, 19 einstellbar bzw. festlegbar ist.

In Kenntnis der Funktionsweise der Verzögerungsschaltung 14 wird nun auf die Gesamtfunktion der Stauförderbahn gemäß Fig.2 eingegangen.

Der Eingangsanschluß E der Sensoreinheit 11 des vordersten Stauplatzes 6a ist an einen Ausgangsanschluß B einer zentralen Steuereinheit 23 angeschlossen (Fig.2), um von dieser zum Starten des Stauvorganges zum Zeitpunkt $t_x$ (s. auch Fig.6) eine positive Spannung $+U_E$ zugeführt zu erhalten. Meldet nun der zugeordnete Lichttaster 12 nach dem Zeitpunkt $t_x$ zum Zeitpunkt $t_o$ (s. Fig.3) das Ankommen des Behälters 4a, so wird das UND-Gatter 13 (s. Fig.4) aktiviert und in der Folge das Magnetventil 16 über die Treiberstufe 15 betätigt; der Behälter 4a wird über den Schwenkantrieb 8a hochgehoben und gestoppt. Über den Ausgangsanschluß A der dem ersten Stauplatz 6a zugeordneten Sensoreinheit 11 wird dem Eingangsanschluß E der Sensoreinheit 11 des nachfolgenden, d.h. zweiten Stauplatzes 6b weiters direkt eine positive Spannung $+U_E$ zum Vorbereiten des UND-Gatters 13 zugeführt, welches dann über den diesem Stauplatz 6b zugeordneten Lichttaster 12 beim Ankommen des nächsten Behälters 4b aktiviert wird, um in der Folge diesen Behälter 4b anzuhalten usw.

Der Ausgangsanschluß A der dem hintersten Stauplatz 6c zugeordneten Sensoreinheit 11 ist mit dem Eingangsanschluß C der zentralen Steuereinheit 23 verbunden, um die Ankunft des letzten Behälters 4c rückzumelden.

Anstelle der zentralen Steuereinheit 23 kann, wie in Fig.2 mit strichlierter Linie dargestellt, auch ein Schalterbaustein 23', z.B. eine Lichtschranke od. dergl., vorgesehen sein, der über einen Ausgangsanschluß B' eine positive Spannung abgibt.

Das Auflösen des Staus bzw. der Weitertransport der Behälter 4 - als erstes des Behälters 4a - wird durch Absenken der positiven Spannung am Ausgangsanschluß B der zentralen Steuereinheit 23 zum Zeitpunkt $t_3$ eingeleitet (s. Fig.6, erste Zeile). In der Folge wird das Magnetventil 16 und damit auch die Antriebseinrichtung 8a ausgeschaltet; gleichzeitig wird die Spannung dem Eingangsanschluß E der dem nachfolgenden Stauplatz 6b zugeordneten Sensoreinheit 11 abgesenkt, worauf sich der beschriebene Vorgang wiederholt bzw. fortgesetzt wird. Hierzu ist anzumerken, daß bei der dem ersten Stauplatz 6a zugeordneten Sensoreinheit 11 die Zeitkonstante des RC-Gliedes 18, 19 der Verzögerungschaltung 14 einen gegen Null gehenden Wert aufweisen kann (d.h. es kann dort die Verzögerungsschaltung 14 auch entfallen), damit der erste Behälter 4a unmittelbar, d.h. ohne Verzögerung, weitertransportiert wird. Hingegen erfolgt der Weitertransport der nachfolgenden Behälter 4b, 4c zu den Zeitpunkten $t'_4$ bzw. $t'_5$ jeweils um die Zeitdauer T verzögert, wie in Fig.3 mit strichpunktierter Linie dargestellt, wie vorstehend auch bereits anhand der Fig.6 mit Fig.3 grundsätzlich erläutert wurde.

Im Gegensatz dazu erfolgt der Weitertransport der nachfolgenden Behälter 4b,4c bei der oben anhand von Fig.1 beschriebenen Stauförderbahn gemäß Stand der Technik erst zu den Zeitpunkten $t_4$ bzw.$t_5$, also wesentlich später, wie in Fig.3 mit voller Linie dargestellt ist.

Der eingangs definierte lichte Behälterabstand S ergibt sich bei der vorliegenden "schnellen" Stauförderbahn (gemäß Fig.2) nunmehr zu

$$S = V_T \times T + (ST-BL),$$

wobei BL die Behälterlänge ist.

Die Tatsache, daß die Zeit T (mit Ausnahme beim vordersten Behälter 4a) größer Null ist, stellt im Gegensatz zum Blockabzug die Funktionssicherheit in Bezug auf die Berührungslosigkeit der Behälter 4 dar.

Für die Anfahr- und Haltebedingungen zweier aufeinanderfolgender Stauplätze bedeutet dies:

a) Die Freigabe eines belegten Stauplatzes 6b,6c erfolgt jeweils verzögert um die einstellbare Zeit T nach der Freigabe (d.h. Start) des vor ihm gelegenen Stauplatzes 6a,6b.

b) Die Aktivierung eines Stauplatzes 6b,6c (das Stoppen des Behälters 4 in dem Moment, in dem er in den Sensorbereich fährt) erfolgt nur dann, wenn der vor diesem Stauplatz 6b,6c gelegene Stauplatz 6a,6b bereits aktiviert ist.

c) Die Freigabe des vordersten Stauplatzes 6a in der Kette der Behälter erfolgt durch ein externes Freigabesignal.

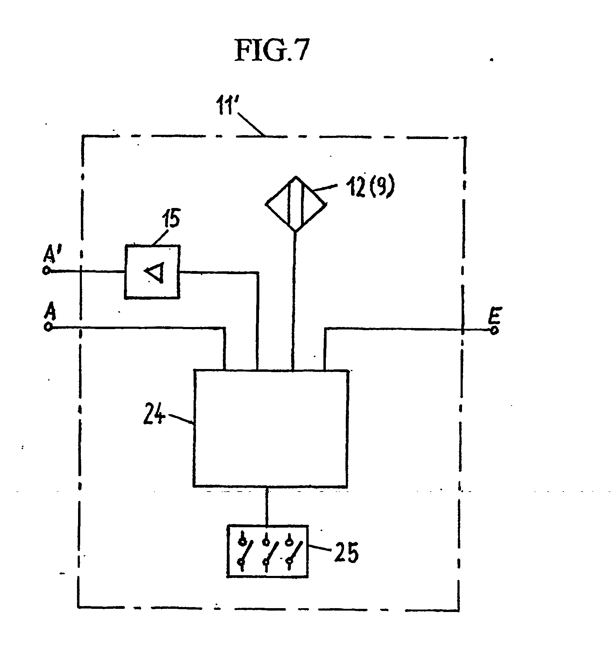

Anstelle der in Fig.5 beispielsweise dargestellten Verzögerungsschaltung 14 kann jede andere geeignete Verzögerungsschaltung 14 eingesetzt werden, und insbesondere kann auch eine programmierbare, vorzugsweise mit einem Mikroprozessor ausgestattete Steuerschaltung 24 in jeder Sensoreinheit 11 verwendet werden, deren Verzögerungszeit, vom Wert Null bei der dem vordersten Stauplatz 6a zugeordneten Sensoreinheit 11, bis zu Werten zwischen z.B. 0,1 bis 0,5 s für die nachfolgenden Sensoreinheiten 11 einstellbar ist, wobei dann auch die Funktion des UND-Gatters 13 von der Steuerschaltung 24 ausgeführt werden kann. Ein Blockschaltbild einer Sensoreinheit 11' mit einer derartigen Steuerschaltung 24 ist in Fig.7 veranschaulicht, wobei die der Schaltung von Fig.4 entsprechenden Bausteine bzw. Anschlüsse mit gleichen Bezugszeichen versehen sind.

Der in der Steuerschaltung 24 von Fig.7 enthaltene Mikroprozessor umfaßt neben den üblichen Speichereinheiten, Ein-und Ausgabeeinheiten usw. als Eingabeeinrichtung für die einzustellende Verzögerungszeit T eine Schaltergruppe 25, beispielsweise zur Einstellung von drei verschiedenen Verzögerungszeiten T.

Die Steuerschaltung 24 bietet den Vorteil, daß über ein Programm der Zustand der Behälter 4 über die Sensoren 12 überwacht werden kann; wenn beispielsweise ein Behälter 4 beim Weitertransport seinen Stauplatz 6 wegen eines mechanischen Staus nach einer vorbestimmten Zeit von z.B. 1 s nicht verlassen kann, so kann der nachfolgende Behälter in seiner Position weiterhin angehalten werden. Hierdurch wird vermieden, daß sich die Behälter 4 zu einem Pulk zusammenschieben.

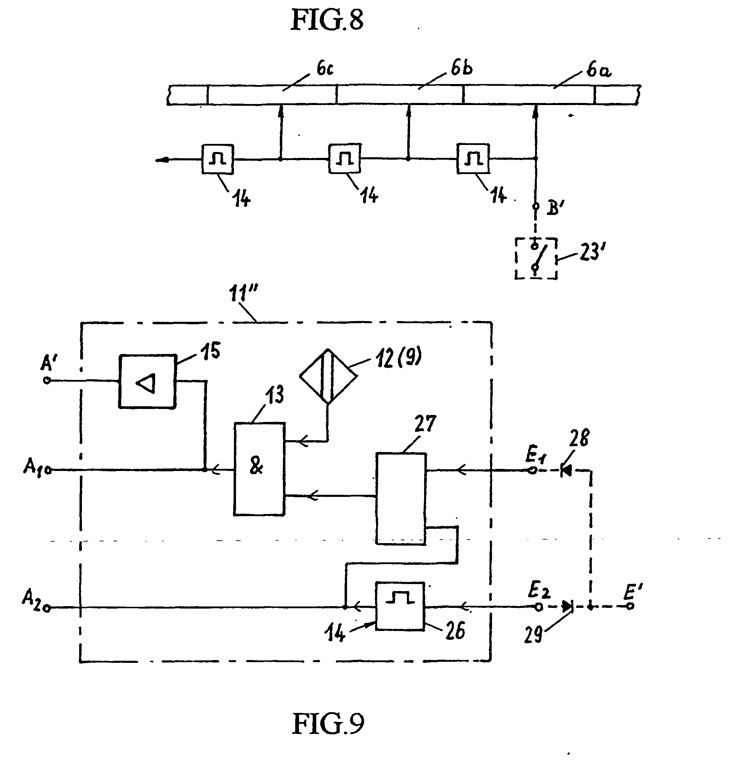

Fig.8 zeigt ein vereinfachtes Schaltbild einer Variante der Steuerung für die Antriebseinrichtungen (Schwenkantriebe 8) bei den Stauplätzen 6a bis 6c, die für den Weitertransport der Behälter 4 mittels in Serie geschalteter Verzögerungsschaltungen 14, z.B. in Form von monostabilen Multivibratoren, vorgesehen ist.

Wird der dem vordersten Stauplatz 6a zugeordneten Antriebseinrichtung (nicht dargestellt) ein Startsignal vom Ausgangsanschluß B' eines Schalterbausteines 23' (ähnlich jenen nach Fig.2) zugeführt, so wird gleichzeitig die dem Stauplatz 6a zugeordnete Verzögerungsschaltung 14 ausgelöst. Nach Ablauf der Verzögerungszeit T wird ein Startsignal an die dem nächsten Stauplatz 6b zugeordnete Antriebseinrichtung (nicht dargestellt) abgegeben und gleichzeitig die dem Stauplatz 6b zugeordnete Verzögerungsschaltung 14 ausgelöst usw.

Das Blockschaltbild nach Fig.9 zeigt ein weiteres, im Vergleich zu Fig.8 detaillierteres Ausführungsbeispiel mit einer zwei Eingangsanschlüsse $E_1$, $E_2$ und zwei Ausgangsanschlüsse $A_1$, $A_2$ aufweisenden Sensoreinheit 11'', mit einer Verzögerungsschaltung 14 in Form eines flankengesteuerten monostabilen Multivibrators 26, welcher zusammen mit einem Kippglied 27 und den bereits in der Sensoreinheit 11 nach Fig.4 enthaltenen elektronischen Bausteinen 12,13 und 15 eine Steuerung für die jeweilige Antriebseinrichtung sowohl für das Anhalten als auch für den Weitertransport der Behälter 4 ermöglicht.

Im einzelnen ist der eine Eingang des UND-Gatters 13 wiederum an den Reflexions-Lichttaster 12 angeschlossen, während der andere Eingang des UND-Gatters 13 mit dem Ausgang des Kippgliedes 27 verbunden ist. Der eine Eingang des Kippgliedes 27 bildet den ersten Eingangsanschluß $E_1$ der Sensoreinheit 11'', während der andere Eingang des Kippgliedes 27 an den Ausgang des monostabilen Multivibrators 26 angeschlossen ist, dessen Eingang den zweiten Eingangsanschluß $E_2$ der Sensoreinheit 11'' bildet. Der Ausgang des UND-Gatters 13 bildet den ersten Ausgangsanschluß $A_1$ der Sensoreinheit 11'', während der Ausgang des monostabilen Multivibrators 26 den zweiten Ausgangsanschluß $A_2$ der Sensoreinheit 11'' bildet. Der Ausgang des UND-Gatters 13 ist wiederum mit dem Eingang der Treiberstufe 15 verbunden, deren Ausgang den Ausgangsanschluß A' der Sensoreinheit 11'' für den Anschluß eines Magnetventiles (nicht dargestellt) bildet.

Die Verbindung mehrerer solcher Sensoreinheiten 11'' erfolgt - ähnlich wie bei den in Fig.8 in Serie geschalteten Verzögerungsschaltungen 14 - seriell, d. h. die Eingangsanschlüsse $E_1$, $E_2$ einer Sensoreinheit 11'' werden jeweils mit den Ausgangsanschlüssen $A_1$, $A_2$ der dem vorhergehenden Stauplatz zugeordneten Sensoreinheit 11'' verbunden.

Wie in Fig.9 mit strichpunktierter Linie dargestellt, sind die Eingangsanschlüsse $E_1$, $E_2$ der dem vordersten Stauplatz zugeordneten Sensoreinheit 11'', gegebenenfalls über Entkopplungsdioden 28,29, an einen gemeinsamen Eingangsanschluß E' angeschlossen, welchem zum Einleiten des Anhaltens der Behälter positive Spannungsimpulse, und zum Einleiten des Weitertransportes der Behälter negative Spannungsimpulse zugeführt werden. Ein positiver Spannungsimpuls schaltet das Kippglied 27 von der Ruhestellung in die Arbeitsstellung um, worauf über den Ausgang des Kippgliedes 27 das UND-Gatter 13 voraktiviert wird. Meldet nun der Reflexions-Lichttaster 12 die Ankunft eines Behälters 4, so wird das UND-Gatter 13 voll aktiviert und das dem Stauplatz 6 zugeordnete Magnetventil 16 eingeschaltet, so daß der Behälter 4 gestoppt wird. Gleichzeitig gelangt über den Ausgangsanschluß A1 ein Startsignal an den Eingangsanschluß $E_1$ der dem nachfolgenden Stauplatz zugeordneten Sensoreinheit 11", worauf sich der beschriebene Vorgang wiederholt bzw. fortgesetzt wird.

Ein am Eingangsanschluß E' angelegter negativer Spannungsimpuls startet den monostabilen Multivibrator 26, der nach Ablauf seiner Verzögerungs-Zeitdauer T das Kippglied 27 von der Arbeitsstellung in die Ruhestellung umschaltet, so daß das UND-Gatter 13 deaktiviert und in der Folge das Magnetventil 16 und damit auch die Antriebseinrichtung 8 ausgeschaltet wird, wie bereits bei der Beschreibung der Funktionsweise der Sensoreinheit 11 nach Fig.4 erläutert wurde. Gleichzeitig wird über den Ausgangsanschluß $A_2$ der Eingangsanschluß $E_2$ der dem nachfolgenden Stauplatz (z. B. 6b) zugeordneten Sensoreinheit 11" angesteuert und der zuvor beschriebene Vorgang wird wiederholt bzw. fortgesetzt.

Die Sensoreinheiten 11,11' und 11" gemäß den Figuren 4,6 und 9 werden zweckmäßigerweise als gedruckte Schaltung angeführt und und können somit für Montage- und Servicezwecke rasch ein- und ausgebaut werden. Auf diese Weise wird auch eine Nachrüstung bereits bestehener Stauförderbahnen der bekannten Art ermöglicht.

**Patentansprüche**

1. Verfahren zur Steuerung einer Stauförderbahn (1) für Fördergüter (4), bei welcher die Fördergüter (4) in einem Staubereich über Sensoren (9) gesteuert in Abstand voneinander angehalten werden, worauf das vorderste Fördergut (4a) nach einer vorgegebenen Zeit weitertransportiert und danach mit Abstand das nachfolgende Fördergut bzw. die nachfolgenden Fördergüter (4b, 4c) weitertransportiert wird bzw. werden, **dadurch gekennzeichnet, dass** jedes der nachfolgenden Fördergüter (4b, 4c) ab dem Zeitpunkt des Weitertransportes des jeweils vorhergehenden Fördergutes (4a) mit einer Verzögerung weitertransportiert wird, wobei die Verzögerungszeit (T) in Abhängigkeit von einem gewünschten lichten Abstand der Fördergüter während des Weitertransportes einstellbar ist, so dass die Verzögerungszeit (T) kleiner ist als jene Zeit $(t_4-t_3)$, die durch Differenz des Zeitpunkts $(t_4)$ der Freigabe des dem vorhergehenden Fördergut (4a) zugeordneten Sensors (9) durch dieses weitertransportierte Fördergut (4a), zu dem die Hinterkante des Förderguts (4a) den Sensor (9) passiert, und des Zeitpunkts $(t_3)$ der Einleitung des Weitertransports dieses vorhergehenden Förderguts (4a), zu dem das Fördergut (4a) auf die Stauförderbahn (1) abgesetzt wird, gegeben ist.

2. Verfahren nach Anspruch 1, **dadurch gekennzeichnet, dass** die Verzögerungszeit (T) auf einen Wert von 0,1 bis 0,5 s einstellbar ist.

3. Steuervorrichtung zur Durchführung des Verfahrens nach Anspruch 1 oder 2, bei der Stauplätze mit Einrichtungen (7) zum Anhalten bzw. Weitertransportieren der Fördergüter (4) vorgesehen sind, welche Einrichtungen (7) über Antriebseinrichtungen (8) mit Steuerelementen, z.B. Magnetventilen (16), betätigbar sind, die jeweils über eine Sensoreinheit (11) aktivierbar bzw. deaktivierbar sind, **dadurch gekennzeichnet, dass** jeder Antriebseinrichtung (8b, 8c), vorzugsweise mit Ausnahme der dem vordersten Stauplatz (6a) zugehörigen Antriebseinrichtung (8a), eine Verzögerungsschaltung (14) zugeordnet ist, um ein der Antriebseinrichtung (8a) des vordersten Stauplatzes (6a) zugeführtes Start-Steuersignal jeweils um eine vorgegebene Verzögerungszeit (T) verzögert, den Antriebseinrichtungen (8b,8c) der nachfolgenden Stauplätze (6b, 6c) zuzuführen, wobei die Verzögerungszeit (T) einstellbar ist, so dass die Verzögerungszeit (T) kleiner ist als jene Zeit $(t_4-t_3)$, die durch Differenz des Zeitpunkts $(t_4)$ der Freigabe einer Sensoreinheit (11) des vordersten Stauplatzes (6a) durch dieses dem vordersten Stauplatz (6a) zugeordneten Förderguts (4a), zu dem die Hinterkante des Förderguts (4a) den Sensor (9) passiert, und des Zeitpunkts $(t_3)$ der Einleitung des Weitertransports dieses Förderguts (4a), zu dem das Fördergut (4a) auf die Stauförderbahn (1) abgesetzt wird, gegeben ist.

4. Steuervorrichtung nach Anspruch 3, **dadurch gekennzeichnet, dass** jede Verzögerungsschaltung (14) in der zugehörigen Sensoreinheit (11) aufgenommen ist.

5. Steuervorrichtung nach Anspruch 4, **dadurch gekennzeichnet, dass** der Ausgang der Verzögerungsschaltung (14) mit einem Eingang eines UND-Gatters (13) verbunden ist, an dessen anderem Eingang der eigentliche Sensor (12) angeschlossen ist, wobei der Eingang der Verzögerungsschaltung (14) den Eingangsanschluss (E) der Sensoreinheit (11) bildet, und wobei der Eingangsanschluss (E) der einem nachfolgenden Stäuplatz (6b, 6c) zugeordneten Sensoreinheit (11) jeweils mit dem Ausgang (A) der Sensoreinheit (11) des vorhergehenden Stauplatzes (6a, 6b) verbunden ist.

**6.** Steuervorrichtung nach Anspruch 5, **dadurch gekennzeichnet, dass** eine Treiberstufe (15) für das Steuerelement (17) an den Ausgang des UND-Gatters (13) angeschlossen ist.

**7.** Steuervorrichtung nach einem der Ansprüche 4 bis 6, **dadurch gekennzeichnet, dass** die Verzögerungsschaltung (14) aus einem RC-Glied (18, 19) besteht, dessen Widerstand (18) durch eine Diode (20) überbrückt ist, und dessen Kondensator (19) an Masse liegt, wobei an der Eingangsseite des RC-Gliedes (18, 19) ein Puffer (21) und an der Ausgangsseite ein Schmitt-Trigger (22) angeschlossen ist, wobei der Puffer (21) und der Schmitt-Trigger (22) vorzugsweise in CMOS-Technik ausgeführt sind.

**8.** Steuervorrichtung nach einem der Ansprüche 3 bis 7, **gekennzeichnet durch** eine programmierbare Steuerschaltung (24), mit welcher die Funktion der Verzögerungsschaltung (14) und des UND-Gatters (13) nachgebildet ist.

**9.** Steuervorrichtung nach Anspruch 8, **dadurch gekennzeichnet, dass** die Steuerschaltung (24) als Mikroprozessor mit Speicher-, Ein- und Ausgabeeinheiten ausgebildet ist.

**10.** Steuervorrichtung nach einem der Ansprüche 3 bis 9, **dadurch gekennzeichnet, dass** der Verzögerungsschaltung (14) eine Schaltergruppe (23'; 25) zur Einstellung der Verzögerungszeit (T) zugeordnet ist.

**Claims**

**1.** A method for controlling an accumulating conveying line (1) for conveyed items (4), wherein, in an accumulating zone, the conveyed items (4) are stopped at a distance from each other under the control of sensors (9), whereupon the most forward conveyed item (4a) is moved on after a predetermined time, and subsequently, in spaced-apart relationship, the following conveyed item, or the following conveyed items (4b, 4c), respectively, is (are) moved on, **characterised in that** from the point of time at which the respective preceding conveyed item (4a) is moved on, each of the following conveyed items (4b, 4c) is moved on with a delay, the delaying time (T) being adjustable as a function of a desired clear distance of the conveyed items during further transportation, so that the delaying time (T) is shorter than that time $(t_4-t_3)$ which is given by the difference between the point of time $(t_4)$ of clearance of the sensor (9) associated with the preceding conveyed item (4a) by this moved-on conveyed item (4a), at which time the rear edge of the conveyed item (4a) passes the sensor (9), and the point of time $(t_3)$ of the initiation of the moving-on of this preceding conveyed item (4a), at which time the conveyed item (4a) is deposited on the accumulating conveying line (1).

**2.** A method according to claim 1, **characterised in that** the delaying time (T) is adjustable to a value of from 0.1 to 0.5 s.

**3.** A control device for carrying out the method according to claim 1 or 2, wherein accumulation spaces with devices (7) for stopping or moving on the conveyed items (4) are provided, which devices (7) can be activated via drive means (8) including control elements, e.g. solenoid valves (16), which each can be activated, or deactivated, respectively, via a sensor unit (11), **characterised in that** each drive means (8b, 8c), preferably with the exception of the drive means (8a) associated with the most forward accumulation space (6a), has an associated delaying circuit (14) so as to supply a start control signal supplied to the drive means (8a) of the most forward accumulation space (6a) delayed by a respective pre-determined delaying time (t) to the drive means (8b, 8c) of the following accumulation spaces (6b, 6c), the delaying time (T) being adjustable such that the delaying time (T) is shorter than that time $(t_4-t_3)$ which is given by the difference between the point of time $(t_4)$ of clearance of a sensor unit (11) of the most forward accumulation space (6a) by this conveyed item (4a) associated to the most forward accumulation space (6a), at which time the rear edge of the conveyed item (4a) passes the sensor (9), and the point of time $(t_3)$ of the initiation of the moving-on of this conveyed item (4a), at which time the conveyed item (4a) is deposited on the accumulating conveying line (1).

**4.** A control device according to claim 3, **characterised in that** each delay circuit (14) is included in the associated sensor unit (11).

**5.** A control device according to claim 4, **characterised in that** the output of the delay circuit (14) is connected to the input of an AND gate (13) to whose other input the sensor (12) proper is connected, wherein the input of the delay circuit (14) forms the input terminal (E) of the sensor unit (11), and wherein the input terminal (E) of the sensor unit (11) associated to a following accumulation space (6b, 6c) is respectively connected to the out put (A) of the sensor unit (11) of the preceding accumulation space (6a, 6b).

**6.** A control device according to claim 5, **characterised in that** a driver stage (15) for the control element (17) is connected to the output of the AND gate (13).

7. A control device according to any one of claims 4 to 6, **characterised in that** the delay circuit (14) consists of an RC means (18, 19) whose resistance (18) is bridged by a diode (20) and whose capacitor (19) is connected to ground, wherein a buffer (21) is connected to the input side of the RC means (18, 19) and a Schmitt trigger (22) is connected to the output side, said buffer (21) and said Schmitt trigger (22) preferably being in CMOS technique.

8. A control device according to any one of claims 3 to 7,
**characterised by** a programmable control circuit (24) by which the function of the delay circuit (14) and of the AND gate (13) is realised.

9. A control device according to claim 8, **characterised in that** the control circuit (24) is designed as a microprocessor having memory, input and output units.

10. A control device according to any one of claims 3 to 9, **characterised in that** the delay circuit (14) has an associated switch group (23'; 25) for adjusting the delay time (T).

**Revendications**

1. Procédé pour commander une voie de transport à accumulation pour des articles à transporter (4), selon lequel les articles à transporter (4) sont retenus à distance les uns des autres et d'une manière commandée au moyen de capteurs (9) dans une zone d'accumulation, à la suite de quoi l'article à transporter le plus en avant (4a) continue à être transporté et ensuite avec distance l'article suivant et respectivement le ou les articles à transporter (4b, 4c) suivants continuent à être transportés, **caractérisé en ce que** chacun des articles à transporter (4b, 4c) suivants continuent à être transportés avec un retard à partir de l'instant de la poursuite du transport de l'article à transporter (4a) respectivement le plus en avant, le temps de retard (T) étant réglable en fonction d'une distance libre désirée entre les articles à transporter pendant la poursuite du transport, de sorte que le temps de retard (T) est inférieur à l'intervalle de temps $(t_4-t_3)$, qui est défini par la différence entre l'instant $(t_4)$ de la libération du capteur (9), associé à l'article à transporter (4a) précédent, par cet article à transporter (4a), dont le transport se poursuit, instant auquel le bord arrière de l'article à transporter (4a) franchit le capteur (9), et l'instant $(t_3)$ du déclenchement de la poursuite du transport de cet article à transporter (4a) précédent, auquel l'article à transporter (4a) est déposé sur la voie de transport à accumulation.

2. Procédé selon la revendication 1, **caractérisé en ce que** le temps de retard (T) est réglable sur une valeur de 0,1 à 0,5 s.

3. Distributeur de commande pour la mise en oeuvre du procédé selon la revendication 1 ou 2, selon lequel les emplacements d'accumulation sont équipés de dispositifs (7) pour arrêter et poursuivre le transport des articles à transporter (4), lesquels dispositifs (7) peuvent être actionnés au moyen de dispositifs d'entraînement (8) avec des éléments de commande, par exemple des soupapes magnétiques (16), qui peuvent être activées ou désactivées respectivement au moyen d'une unité à capteur (11), **caractérisé en ce qu'**un circuit de retardement (14) est associé à chaque dispositif d'entraînement (8b, 8c), de préférence à l'exception du dispositif d'entraînement (8a) associé à l'emplacement d'accumulation le plus en avant (6a),

de manière à envoyer un signal de commande de démarrage, au dispositif d'entraînement (8a) de l'emplacement d'accumulation le plus en avant (6a), et ce respectivement d'une manière retardée d'un temps de retard prédéterminé (T),

et à faire suivre aux dispositifs d'entraînement (8b, 8c) des emplacements d'accumulation suivants (6b, 6c), le temps de retard (T) étant réglable de sorte que le temps de retard (T) est inférieur à l'intervalle de temps $(t_4 - t_3)$,

qui est défini par la différence entre l'instant $(t_4)$ de la libération d'une unité de capteur (11), de l'emplacement d'accumulation précédent (6a) associé à l'article à transporter (4a) précédent, par cet article à transporter (4a), dont le transport se poursuit,

instant auquel le bord arrière de l'article à transporter (4a) franchit le capteur (9), et l'instant $(t_3)$ du déclenchement de la poursuite du transport de cet article à transporter (4a) précédent, auquel l'article à transporter (4a) est déposé sur la voie de transport à accumulation (1).

4. Dispositif de commande selon la revendication 3, **caractérisé en ce que** chaque circuit de retardement (14) est logé dans l'unité à capteur associée (11).

5. Dispositif de commande selon la revendication 4, **caractérisé en ce que** la sortie du circuit de retardement (14) est reliée à une entrée d'une porte ET (13), à l'autre entrée de laquelle est raccordé le capteur proprement dit (12), l'entrée du circuit de retardement (14) constituant la borne d'entrée (E) de l'unité à capteur (11), et la borne d'entrée (E) de l'unité à capteur (11), qui est associée à l'emplacement d'accumulation suivant (6b, 6c), étant relié respectivement à la sortie (A) de l'unité à capteur (11) de l'emplacement d'accumulation précédent (6a, 6b).

6. Dispositif de commande selon la revendication 5, **caractérisé en ce qu'**un étage d'attaque (15) pour l'élément de commande (17) est raccordé à la sortie de la porte ET (13).

7. Dispositif de commande selon l'une des revendications 4 à 6, **caractérisé en ce que** le circuit de retardement (14) est constitué par un circuit RC (18, 19), dont la résistance (18) est Shuntée par une diode (20), et dont le condensateur (19) est connecté à la masse, et dans lequel un tampon (21) est connecté du côté entrée du circuit RC (18, 19) et un déclencheur de Schmitt (22) du côté de sortie du circuit RC (18, 19), le tampon (21) et le déclencheur de Schmitt (22) étant agencés de préférence selon la technique CMOS.

8. Dispositif de commande selon l'une des revendications 3 à 7, **caractérisé par** un circuit de commande programmable (24), à l'aide duquel est simulée la fonction du circuit de retardement (14) et de la porte ET (13).

9. Dispositif de commande selon la revendication 8, **caractérisé en ce que** le circuit de commande (24) est agencé sous la forme d'un microprocesseur comportant des unités de mémorisation, d'entrée et de sortie.

10. Dispositif de commande selon l'une des revendications 3 à 9, **caractérisé en ce qu'**au circuit de retardement (14) est associé un groupe d'interrupteurs (23'; 25) servant à régler le temps de retard (T).

# FIG.1

EP 0 959 028 B1

# FIG.2

EP 0 959 028 B1

# FIG.3

# FIG.4

# FIG.5

# FIG.6

14

# FIG.7

## FIG.8

## FIG.9